# EUROPEAN PATENT SPECIFICATION

(11) **EP 4 254 264 B1**
(45) Date of publication and mention of the grant of the patent: **18.02.2026**
(21) Application number: 23166237.0
(22) Date of filing: 31.03.2023
(51) Int. Cl.: G06K 19/077, H01F 1/28, H01Q 1/52, H01Q 1/22

(54) **ISOLATION FILM, METHOD OF MANUFACTURING ISOLATION FILM, AND UHF RFID TAG USING ISOLATION FILM**
ISOLATIONSFILM, VERFAHREN ZUR HERSTELLUNG EINES ISOLATIONSFILMS, UND UHF RFID ETIKETT UNTER VERWENDUNG EINES ISOLATIONSFILMS
FILM D'ISOLATION, PROCÉDÉ DE FABRICATION D'UN FILM D'ISOLATION, ET ÉTIQUETTE RFID UHF UTILISANT FILM D'ISOLATION

(30) Priority: 01.04.2022 TW 111112956
(43) Date of publication of application: 04.10.2023
(73) Proprietor: Feedpool Technology Co., Ltd., Taoyuan City 32659 (TW)
(72) Inventor: LIU, SHIH-LAI, 324031 Taoyuan City (TW)
(74) Representative: Lang, Christian

(56) References cited:
- EP-B1- 2 096 711
- US-A1- 2007 252 771

## Description

### BACKGROUND

### 1. Technical Field

The present disclosure relates to an isolation sheet and an ultra-high frequency (UHF) radio frequency identification (RFID) tag that uses the isolation sheet for reducing interference from the metal attached to or near the UHF RFID tag when the RFID tag is in UHF environment, thereby improving the recognition efficiency.

### 2. Description of Related Art

UHF refers to electromagnetic waves with frequencies ranging from 300MHz to 3GHz and UHF technology has been widely used in RFID tags, such as UHF RFID tags used in warehouse management. "UHF RFID tag" refers to an RFID tag that can be used in the UHF frequency band. This is because UHF RFID tags have the characteristics of non-contact sensing, a wide reading range and multiple tags can be read by a UHF RFID reader (or RFID read-write device) at once, thereby shortening operation time.

When a UHF RFID tag is attached to or near the surface of a typical non-metallic product, such as a plastic tray, the UHF RFID reader can start reading the UHF RFID tag from a relatively long distance, which is known as the "original reading distance". However, when the UHF RFID tag is attached to or near a metal product, such as a stainless steel or aluminum pot placed on a warehouse shelf, or a bottle of water or glass bottle, the input impedance of the UHF RFID tag will rapidly decay due to its proximity to the metal or bottle surface. In this case, the UHF RFID reader must be closer to the tag than the "original reading distance" to have a chance of reading the UHF RFID tag, which is called the "maximum reading distance". That is the position starting from the UHF RFID tag and gradually moving farther from the UHF RFID tag until the farthest position that the UHF RFID tag can still be read. Any position beyond the position the data cannot be read from the UHF RFID tag. Thus, when the UHF RFID tag is attached to or near the surface of the non-metallic product, the "original reading distance" is greater than the "maximum reading distance" when the UHF RFID tag is attached to or near the surface of the metallic product. Sometimes, if the UHF RFID tag's input impedance decay is too severe, it will cause the UHF RFID tag to be unreadable and the maximum reading distance will be marked as zero.

Currently, in order to overcome the problem of UHF RFID tags being attached to or near metal objects, an isolation sheet is typically placed between the metal object and the UHF RFID tag to reduce the impact of the metal object on the maximum reading distance. For example, in prior art 1 (China Patent Publication No. CN109713427B), a multilayer composite comprising a polymer film and a foam medium layer is used as the isolation sheet. However, the thickness of the foam medium layer alone must be greater than 0.5mm to achieve isolation effect (i.e., the UHF RFID reader can read the data from the UHF RFID tag) and the double-layer design generates the complexity and difficulty for manufacturing processes. Additionally, prior art 2 (China Patent Publication No. CN103401055B) uses magnetic materials as a single-layer isolation sheet to improve the above-mentioned problems in prior art 1. However, the same problem also occurs in prior art 2. The thickness of the magnetic material must be greater than 0.5mm (millimeters), and at this time, the maximum reading distance is only 1.5m (meters). Even if the thickness of the magnetic material is increased to 5mm, the maximum reading distance is only 5m.

With the miniaturization of both metal products and UHF RFID tags, the thickness of the isolation sheet also becomes crucial. In other words, the thickness of the isolation sheet must be reduced. The thickness of the isolation sheet used in the prior arts 1 and 2, which is greater than 0.5mm, is no longer sufficient for the industry's needs. In fact, the industry has already faced the need to read UHF RFID tags when the thickness of the isolation sheet is less than 0.5mm.

Although prior art 2 describes the numerical ranges of the real and imaginary parts of the dielectric constant and the loss tangent, as well as the real and imaginary parts of the magnetic permeability and the loss tangent, prior art 2 did not pay attention to the mutual influence of the dielectric constant and the magnetic permeability. This is also a major factor that caused prior art 2 failing to reduce the thickness of the isolation sheet to less than 0.5mm under the circumstances that the UHF RFID tag still is able to be read.

Further, from document US 2007/0252771 A1 an electromagnetic interference suppressor for use in reducing influences from neighboring metal is known, so as to improve radio communications of an electromagnetic induction system in an apparatus having a IC tag function. An antenna device and an electronic information transmitting apparatus using such a suppressor are also shown therein. From this disclosure, the structure of an isolation sheet according to the preamble of claim 1 may be derived, in which, for the specific magnetic permeability, the real part (µ') is set to at least 30 and the imaginary part (µ") is set to 6 or less, and, for the specific dielectric constant, the real part (ε') is set to at least 30 and the imaginary part (ε'') is set to 500 or less. More specifically, in a frequency range of 50 MHz to 1 GHz, the real part (µ') is set to at least 7 or the imaginary part (µ'') is set to at least 5. From document EP 2 096 711 B1 another sheet body for improving communication is known, which is used for performing wireless communication of an antenna device provided with such sheet body.

### SUMMARY

Based on the rich professional knowledge and practical experience over the years, the inventor has improved the invention in order to solve various problems caused by conventional isolation sheets. Therefore, the inventor has come up this disclosure with the assistance of rich professional knowledge and practical experience.

The isolation sheet provided by the present disclosure, even when its thickness is less than 0.5mm and is applied between the back of the antenna of the UHF RFID tag and a metal product, the information stored in the UHF RFID tag can still be read by the UHF RFID reader at a predetermined distance in front of the antenna of the UHF RFID tag that operates within the frequency bandwidth of 860MHz to 960MHz, thereby achieving the effect of thinning. The isolation sheet is an integrated molding single-layer structure. "Integrated molding" means that the isolation sheet is formed by the same process without assembly, therefore having the advantage of simple manufacturing process. In addition, the isolation sheet is composed of a resin layer and a plurality of insulated soft magnetic particles dispersed in the resin layer. The shape of the insulated soft magnetic particles is selected to be spherical and the weight percentage of the insulated soft magnetic particles in the isolation sheet can be adjusted so that the product of the real part of the dielectric constant (ε'), the dielectric quality factor (Qε), the real part of the magnetic permeability (µ') and the magnetic quality factor (Qµ) confined to this single-layer structure is between two predetermined different values, thereby achieving the effect of simultaneously matching the electrical and magnetic properties in the single-layer structure. The dielectric quality factor (Qε) and the magnetic quality factor (Qµ) are described later.

This invention provides an isolation sheet according to claim 1, includes a resin layer and a plurality of insulated soft magnetic particles dispersed in the resin layer; the isolation sheet has a real part of dielectric constant (ε'), an imaginary part of dielectric constant (ε"), a dielectric quality factor (Qε), a real part of magnetic permeability (µ'), an imaginary part of magnetic permeability (µ") and a magnetic quality factor (Qµ). The dielectric quality factor (Qε) is the quotient obtained by dividing the real part of the dielectric constant (ε') with the imaginary part of the dielectric constant (ε"), the magnetic quality factor (Qµ) is the quotient obtained by dividing the real part of the magnetic permeability (µ') with the imaginary part of the magnetic permeability (µ''), wherein the product of the real part of dielectric constant (ε'), dielectric quality factor (Qε), real part of magnetic permeability (µ'), and magnetic quality factor (Qµ) is between 3000 and 4500.

The product of the real part of the dielectric constant (ε'), the dielectric quality factor (Qε), the real part of the magnetic permeability (µ') and the magnetic quality factor (Qµ) is between 3522.40 and 4460.50.

More specifically, the product of the real part of the dielectric constant (ε'), the dielectric quality factor (Qε), the real part of the magnetic permeability (µ') and the magnetic quality factor (Qµ) is between 3550 and 4000.

The real part of the dielectric constant (ε') is between 10 and 20, the imaginary part of the dielectric constant (ε") is between 0.8 and 1.5, the real part of the magnetic permeability (µ') is between 5.0 and 6.5, the imaginary part of the magnetic permeability (µ") is between 1.0 and 2.5, the dielectric quality factor (Qε) is between 10 and 20 and/or the magnetic quality factor (Qµ) is between 2.0 and 5.0.

According to the present invention, the real part of the dielectric constant (ε') is between 11.15 and 16.53, the imaginary part of the dielectric constant (ε") is between 0.8 and 1.33, the real part of the permeability (µ') is between 5.23 and 6.12, the imaginary part of the permeability (µ") is between 1.23 and 2.42, the dielectric quality factor (Qε) is between 12.43 and 19.50 and/or the magnetic quality factor (Qµ) is between 2.16 and 4.69, the product of the real part of the dielectric constant (ε') and the dielectric quality factor (Qε) is between 155.40 and 311.81 and/or the product of the real part of the permeability (µ') and the magnetic quality factor (Qµ) is between 11.30 and 28.70.

The insulated soft magnetic particles are spherical in shape, the insulated soft magnetic particles have a core part and a shell part surrounding the core part; the core part is a soft magnetic material made of carbonyl iron powder, and the shell part is made of an insulating material and sequentially coats the core part with a phosphate film and a silicate film by overlay coating from the inside out.

The plurality of insulated soft magnetic particles accounts for 70wt% to 87wt% of the isolation sheet, the resin layer is composed of a resin material, the resin material accounts for 13wt% to 30wt% of the isolation sheet, the resin material and the plurality of insulated soft magnetic particles account for 100wt% of the isolation sheet in total, and the particle size of the insulated soft magnetic particles is between 1µm and 5µm.

More specifically, the plurality of insulated soft magnetic particles accounts for 70wt% to 77.5wt% of the isolation sheet, and the resin material accounts for 22.5wt% to 30wt% of the isolation sheet.

The isolation sheet is an integrated molding single-layer structure.

The present disclosure also provides a UHF RFID tag, including an antenna and the aforementioned isolation sheet disposed below the antenna.

According to the present invention, the thickness of the isolation sheet is less than 0.5mm.

According to the present invention, the isolation sheet are suitable for a working bandwidth of 860MHz to 960MHz.

The present disclosure also provides a method for manufacturing the isolation sheet, includes mixing a thermoplastic elastomer with a plurality of insulated soft magnetic particles after weighing, then milling the mixture into a flexible rolled body for the ease of printing and bonding with the antenna of a UHF RFID tag, and subsequently cutting into sheet-shaped isolation sheets. Since the thickness is less than 0.5mm, it is more suitable for making flexible rolled body (commonly known as rolled materials), which can be automatically bonded with tags and is suitable for mass production.

In one manufacturing method of an isolation sheet, wherein the plurality of insulated soft magnetic particles accounts for 70wt% to 87wt% of the isolation sheet, the thermoplastic elastomer accounts for 13wt% to 30wt% of the isolation sheet, the thermoplastic elastomer and the plurality of insulated soft magnetic particles account for 100wt% of the isolation sheet in total, and particle size of the insulated soft magnetic particles is between 1µm and 5µm.

In one manufacturing method of an isolation sheet, the thickness of the isolation sheet is less than 0.5mm.

Accordingly, the present disclosure provides a flexible integrated molding single-layer isolation sheet made of insulated soft magnetic particles and thermoplastic elastomer. By adjusting the weight percentage of the insulated soft magnetic particles in the isolation sheet, the product of the real part (ε') of the dielectric constant, the dielectric quality factor (Qε), the real part (µ') of the magnetic permeability and the magnetic quality factor (Qµ) is limited to a range between two different predetermined values, thereby achieving the effect of simultaneously matching the electrical and magnetic properties in the single-layer structure of the isolation sheet. Thereby even if the thickness of the isolation sheet is less than 0.5mm and the isolation sheet is placed between the back of the antenna of a UHF RFID tag and a metal product, an RFID reader located in front of the antenna of the UHF RFID tag and at a predetermined distance away may still read the information stored in the antenna of the UHF RFID tag at a working frequency band of 860MHz to 960MHz.

### BRIEF DESCRIPTION OF THE DRAWINGS

Fig. 1 is a schematic diagram of the structure of the isolation sheet and UHF RFID tag of the present disclosure, and the application on a metal product.
Fig. 2 is a use state diagram of the UHF RFID tag of the present disclosure and the application on a metal product.
Fig. 3 is a relationship comparative chart of the maximum reading distance and frequency under the working bandwidth using the isolation sheet of the present disclosure and commercially available isolation sheets.

### DESCRIPTION OF THE EXEMPLARY EMBODIMENTS

In order to understand the technical features, contents, advantages and effects that can be achieved by the present disclosure, the expression of the present disclosure in conjunction with the attached drawings will be described in detail below. The purpose of the drawings used is only for illustrating and assisting the specification and may not necessarily represent the actual proportion and precise configuration after the implementation of the present disclosure. Therefore, the interpretation of the proportion and configuration relationship of the attached drawings should not limit the scope of the present disclosure in actual implementation, which is hereby stated.

In order to make the description of the content disclosed by the present disclosure more detailed and complete, the following description provides explanatory descriptions for the embodiment and specific examples of the present disclosure. However, these are not the only forms of implementation or application of the specific embodiments of the present disclosure. In addition, the use of "~" and "between...and..." in this specification and the claims refers to a numerical range that includes the values before and after the "~" and "...and..." as the lower limit and upper limit values. The term "wt%" in this specification and the claims refers to weight percent and the term "particle size" refers to the particle size measured using a laser particle size analyzer.

### <Structure of the isolation sheet and UHF RFID Tag>

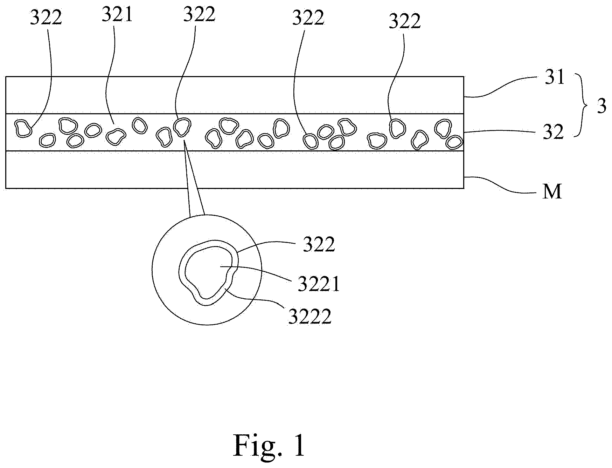

Referring to Fig. 1, the present disclosure provides an isolation sheet 32 that is disposed between an antenna 31 of the UHF RFID tag 3 and a metal product M. In other words, the UHF RFID tag 3 includes the antenna 31 and the isolation sheet 32 which is disposed below the antenna 31. The isolation sheet 32 includes a resin layer 321 and a plurality of insulated soft magnetic particles 322 dispersed within the resin layer 321.

The resin layer 321 is composed of a resin material that can be a thermoplastic polyurethane elastomer or a thermoplastic polyolefin elastomer. The resin material accounts for 13wt% to 30wt% of the isolation sheet.

The insulated soft magnetic particles 322 are spherical in shape. Each insulated soft magnetic particle 322 has a core part 3221 and a shell part 3222 surrounding the core part 3221. The core part 3221 is made of a soft magnetic material. The core part 3221 is a carbonyl iron powder ball. The shell part 3222 is made of an insulating material and sequentially coats the core part 3221 with a phosphate film and a silicate film by overlay coating from the inside out. The phosphate film accounts for 0.5wt% to 5wt% of the core part 3221 and the silicate film accounts for 0.5wt% to 3wt% of the core part 3221. The particle size of the insulated soft magnetic particles 322 is between 1µm and 5µm. The plurality of insulated soft magnetic particles 322 account for 70wt% to 87wt% of the isolation sheet. Preferably, the resin material and the plurality of insulated soft magnetic particles account for 100wt% of the isolation sheet in total.

### <Manufacturing method of the isolation sheet>

After a thermoplastic polyurethane elastomer and insulated soft magnetic particles are weighed and mixed according to the weight percentages listed in the following Table 1 (comprising Table 1-1 and Table 1-2), put into a mixing mill for mixing. After fully mixing the thermoplastic polyurethane elastomer and the insulated soft magnetic particles to form a uniform gel material, the material is discharged. Next, the gel material is passed through a rolling mill and is milled according to the thicknesses listed in Tables 1 and 2 to form a flexible rolled body and then cut into sheets to prepare the isolation sheets of Embodiments 1-3 and Comparative Examples 1-2. Therefore, the isolation sheet is an integrated molding single-layer structure. Integrated molding means that the isolation sheet is formed by the same process (rolling mill) without assembly. Among them, Comparative Examples 1-2 use insulated soft magnetic particles with sheet-shaped FeSiCr (D) and with sheet-shaped FeSiAl (E) instead of spherical carbonyl iron powder for the core parts.

### <Evaluation and testing for the performance of the isolation sheet >

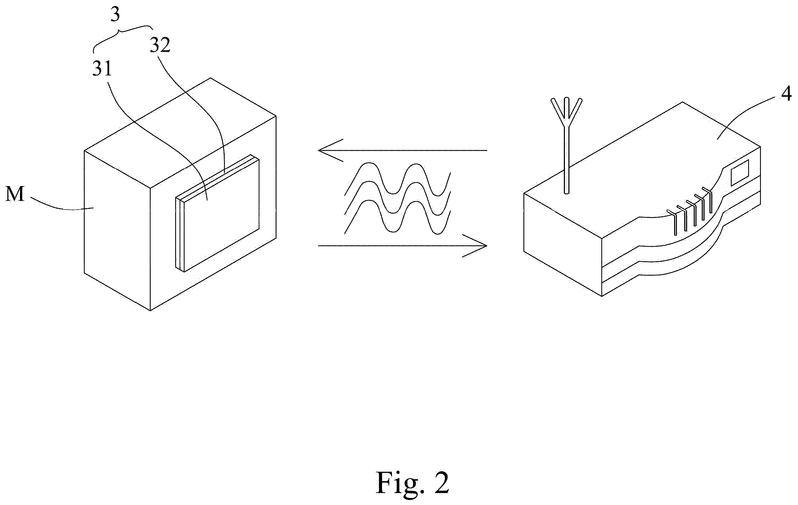

Referring to Fig. 2, the isolation sheet 32 (Length*width is 57*19mm) of the embodiments and the comparative examples are correspondingly placed between the antenna 31 of the UHF RFID tags 3 [F-type UHF TAG (IFA Tag) 57*19mm] and the metal product M, so that the antenna 31, the single-layer isolation sheet 32 and the metal product M are tightly attached. Then, according to ASTM D7449, the network analyzer KEYSIGHT 5071C and N1500A material measurement software is used to measure the electromagnetic data as shown in Table 1 (comprising Table 1-1 and Table 1-2), and the maximum reading distance is measured using the Tagformance Pro tester produced by Finnish Voyantic Company as the UHF RFID tag reader 4 at the operating frequency of 915MHz and recorded in Table 1 (comprising Table 1-1 and Table 1-2) and Table 2. If the distance exceeds the maximum reading distance, the data of the UHF RFID tag cannot be read by the instrument. It is noteworthy that the farthest distance at which the instrument can read UHF RFID tag data under the condition of no metal interference is taken as the original reading distance. The original reading distance is 3.76m. The "recovery percentage" in Table 1 (comprising Table 1-1 and Table 1-2) refers to the quotient obtained by dividing the maximum reading distance with the original reading distance and being expressed as a percentage. Based on the drawbacks of prior art 1 and prior art 2, the standard of the isolation sheet is set to be stricter than that of prior art 1 and prior art 2. Therefore, when the thickness of the isolation sheet is 0.5mm, the recovery percentage greater than 40% or the maximum reading distance greater than 1.50m is qualified. When the thickness of the isolation sheet is 0.5mm, the recovery percentage greater than 15% or the maximum reading distance greater than 0.5m is acceptable. It is noteworthy that when the isolation sheet of the present disclosure tag is implemented as other possible implementation examples (the embodiments not listed below), the isolation sheet may also be placed between the antenna of the UHF RFID (monopole Tag) and the metal product for testing and may also be measured at the operating frequency of 866MHz. In other words, the isolation sheet of the present disclosure is suitable for measuring at the operating bandwidth of 860MHz to 960MHz.

**Table 1-1**

| Item | Material of the core part of the insulated soft magnetic particles | Proporti on for the insulate d soft magneti c particles in the isolation sheet wt% | Proporti on for the resin material in the isolation sheet wt% | ε' | ε" | µ' | µ" | Qε | Qµ | ε '×Q ε | µ*'×Q*µ | ε '×Q ε × *µ '×XQ µ* |
|---|---|---|---|---|---|---|---|---|---|---|---|---|
| Embo dimen t 1 | spherical carbonyl iron powder (A) | 77.5 | 22.5 | 11.15 | 0.8 | 6.12 | 1.23 | 13.94 | 4.69 | 155.40 | 28.70 | 4460.50 |
| Embo dimen t 2 | spherical carbonyl iron powder (B) | 77.5 | 22.5 | 16.53 | 1.33 | 6.1 | 1.99 | 12.43 | 3.06 | 205.44 | 18.67 | 3834.82 |
| Embo dimen t 3 | spherical carbonyl iron powder (C) | 70 | 30 | 15.99 | 0.82 | 5.23 | 2.42 | 19.50 | 2.16 | 311.81 | 11.30 | 3522.40 |
| Comp arativ e examp le 1 | Sheet-shaped FeSiCr (D) | 77.5 | 22.5 | 29.34 | 13.31 | 13.2 | 3.98 | 2.20 | 3.31 | 64.68 | 43.69 | 2825.82 |
| Comp arativ e examp le 2 | Sheet-shaped FeSiAl (E) | 70 | 30 | 17.87 | 5.3 | 11.85 | 6.18 | 3.37 | 1.92 | 60.25 | 22.75 | 1370.86 |

**Table 1-2**

| Item | Thickness of the isolation sheet (mm) | Maximum reading distance (m) | Recovery percentage % |
|---|---|---|---|
| Embodiment 1 | 0.5 | 2.00 | 53.1 |
| | 1.0 | 3.76 | 100 |
| Embodiment 2 | 0.5 | 1.93 | 51.3 |
| | 1.0 | 2.63 | 69.9 |
| Embodiment 3 | 0.5 | 1.51 | 40.2 |
| | 1.0 | 2.40 | 63.8 |
| Comparative example 1 | 0.5 | 0.50 | 12.5 |
| | 1.0 | 0.90 | 22.5 |
| Comparative example 2 | 0.5 | 0.50 | 12.5 |
| | 1.0 | 0.60 | 15.0 |

In table 1 (comprising Table 1-1 and Table 1-2), ε' represents the real part of the dielectric constant, ε" represents the imaginary part of the dielectric constant, Qε represents the dielectric quality factor, µ' represents the real part of the permeability, µ'' represents the imaginary part of the permeability and Qµ represents the magnetic quality factor. The dielectric quality factor (Qε) is the quotient obtained by dividing the real part of the dielectric constant (ε') with the imaginary part of the dielectric constant (ε''). The magnetic quality factor (Qµ) is the quotient obtained by dividing the real part of the permeability (µ') with the imaginary part of the permeability (µ''). ε'×Qε represents the product of the real part of the dielectric constant (ε') and the dielectric quality factor (Qε) and µ'×Qµ represents the product of the real part of the permeability (µ') and the magnetic quality factor (Qµ).

It may be known from Table 1 (comprising Table 1-1 and Table 1-2) that when the thickness of the isolation sheet is 0.5mm as shown as Examples 1 to 3, the recovery percentage is greater than 40% and the maximum reading distance is greater than 1.50m, so they are qualified products. On the other hand, in Comparative Examples 1 and 2, when the thickness of the isolation sheet is 0.5mm, the recovery percentage is less than 40% and the maximum reading distance is less than 1.50m, so they are unqualified products. Table 1 (comprising Table 1-1 and Table 1-2) further shows that the "electromagnetic factor" of Examples 3, 2, and 1 are 3522.40, 3834.82, and 4460.50, respectively. The electromagnetic factor is the product of the real part of the dielectric constant (ε'), the dielectric quality factor (Qε), the real part of the magnetic permeability (µ') and the magnetic quality factor (Qµ). Therefore, the electromagnetic factor of the isolation sheet of the present disclosure ranges from 3000 to 4500, preferably from 3522.40 to 4460.50 and more preferably from 3550 to 4000. As shown in Table 1 (comprising Table 1-1 and Table 1-2), the higher the value of the electromagnetic factor, the higher the recovery percentage. For example, the electromagnetic factors of Examples 3, 2 and 1 are 3522.40 , 3834.82 , 4460.50 respectively that gradually increases, the recovery percentages of Examples 3, 2, and 1 are 40.2%, 51.3%, and 53.1% respectively, also gradually increases. Therefore, the "electromagnetic factor" mentioned in the present disclosure is highly positively correlated with the recovery percentage. In other words, the isolation sheets may be designed with specific thickness and recovery percentages based on the electromagnetic factor, which is a major creative aspect of the present disclosure. The "electromagnetic factor" indicates that the isolation sheet of the present disclosure takes into account the combined effects of electrical and magnetic properties in the integrated molding single-layer structure, rather than separately considering the electrical or magnetic effects in each layer before stacking and assembling in the multi-layer structure.

Moreover, ε' may be between 10 and 20, ε'' may be between 0.8 and 1.5, µ' may be between 5.0 and 6.5, µ" may be between 1.0 and 2.5, Qε may be between 10 and 20 and/or Qµ may be between 2.0 and 5.0. As shown in Table 1 (comprising Table 1-1 and Table 1-2), ε' is between 11.15 and 16.53, ε" is between 0.8 and 1.33, µ' is between 5.23 and 6.12, µ'' is between 1.23 and 2.42, Qε is between 12.43 and 19.50, Qµ is between 2.16 and 4.69 and the product of ε' and Qε is between 155.40 and 311.81 or the product of µ' and Qµ is between 11.30 and 28.70.

Additionally, it is preferable that the plurality of insulated soft magnetic particles account for 70wt%~77.5wt% of the isolation sheet and the resin material accounts for 22.5wt%~30wt% of the insulating sheet. The resin material and the plurality of insulated soft magnetic particles account for 100wt% of the isolation sheet in total.

### <Unexpected Effect 1>

Table 2 shows the production of isolation sheets of different thicknesses using the thermoplastic polyurethane elastomer and insulated soft magnetic particles of Example 1 in Table 1 (comprising Table 1-1 and Table 1-2) and the maximum reading distance and recovery percentage are measured according to the aforementioned method and equipment.

**Table 2**

| Item | Thickness of the isolation sheet mm | Maximum reading distance m | Recovery percentage % |
|---|---|---|---|
| | 0.1mm | 0.33 | 8.7 |
| | 0.2mm | 0.66 | 17.6 |
| | 0.3mm | 1.24 | 32.9 |
| Embodiment 1 | 0.4mm | 1.60 | 42.4 |
| | 0.5mm | 2.00 | 53.1 |
| | 0.8mm | 3.13 | 83.0 |
| | 1.0mm | 3.76 | 100.0 |
| | 2.0mm | 5.82 | 154.7 |
| | 3.0mm | 7.33 | 194.7 |

When the thickness of the isolation sheet is 1.0mm, the recovery percentage may reach 100% and the maximum reading distance has been restored to 3.76m (i.e., the "original reading distance" of the UHF RFID tag). However, the unexpected discovery from table 2 is that when the thickness of the isolation sheet reaches 2.0mm and 3.0mm, the maximum reading distance exceeds 3.76m and reaches 5.82m and 7.33m, respectively. When converted to recovery percentage, they are 154.7% and 194.7%, respectively. In other words, the surprising finding is that when the thickness of the isolation sheet of the present disclosure exceeds a specific thickness, it will cause a gain effect on the isolation sheet, which will make the maximum reading distance exceed or equal the original reading distance. This breaks the limitation mentioned in the prior art or literature, which previously believed that the maximum reading distance cannot be greater than the original reading distance.

Table 2 further shows that when the thickness of the isolation sheet is 0.4mm, the recovery percentage is 42.4%, which is greater than the passing standard of 40%, and the maximum reading distance is 1.60m, which is also greater than the passing standard of 1.50m. In other words, the surprising finding is that the isolation sheet of the present disclosure breaks the limitations mentioned in the prior arts 1 and 2. The prior arts 1 and 2 both believe that the isolation sheet must be greater than 0.5mm to allow the UHF RFID reader to read the data of the UHF RFID tag.

Furthermore, table 2 shows that even when the thickness of the isolation sheet is 0.1mm, the data of the UHF RFID tag can still be read within a distance of 0.33m, even if its recovery percentage is only 8.7%. In other words, the surprising finding is that the isolation sheet of the present disclosure breaks the limitations mentioned in the prior arts 1 and 2. The prior arts 1 and 2 both believe that when the thickness of the isolation sheet is less than 0.5mm, the UHF RFID reader cannot read the data of the UHF RFID tag.

### <Unexpected Effect 2>

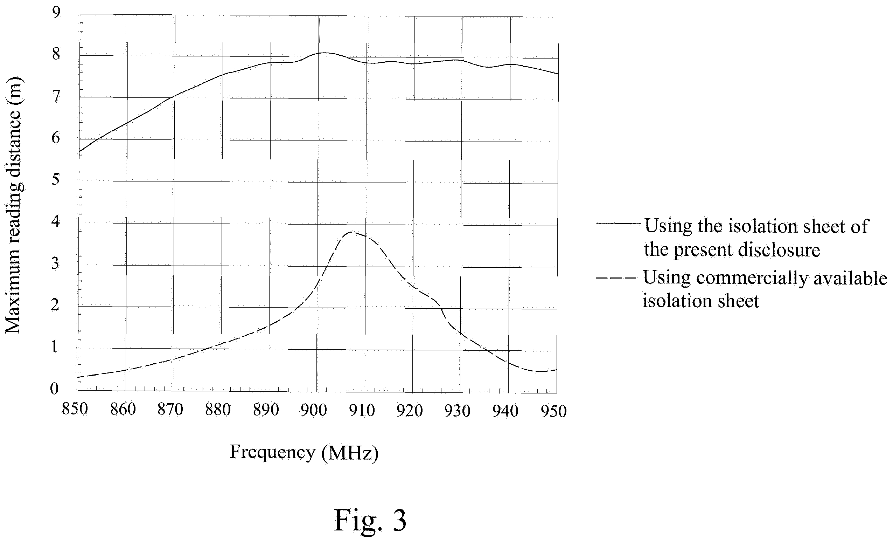

Based on the obtained commercially available isolation sheet (composition unknown) with a thickness of 5mm, the isolation sheet with a thickness of 5mm in Example 1 was further used on intention, the instrument and method described in the < Evaluation and testing for the performance of the isolation sheet > section are used for testing the isolation sheets but the operating bandwidth is changed to 850MHz~950MHz. The test results are combined and plotted in Fig. 3.

According to Fig. 3, the UHF RFID tag with the isolation sheet of embodiment 1 has a longer maximum read distance than the UHF RFID tag with the commercially available isolation sheet. For example, when the distance between the UHF RFID tag reader and the UHF RFID tag antenna is 4 to 5.5 meters, the antenna data of the UHF RFID tag with the commercially available isolation sheet cannot be read by any frequency in the operating bandwidth of 850MHz to 950MHz of the UHF RFID tag reader. However, the antenna data of the UHF RFID tag with the isolation sheet of embodiment 1 may be read by the UHF RFID tag reader at any frequency in the operating bandwidth of 850MHz to 950MHz. Obviously, compared to the commercially available isolation sheet, the data of the UHF RFID tag with the isolation sheet of the present disclosure may be read at any frequency in the operating bandwidth of 850MHz to 950MHz within a specific distance from the antenna in the practical operation thus the effect of "read antenna data over the full frequency band" may be achieved.

In addition, it is further known from Fig. 3 that the "maximum read distance/frequency" plot of the commercially available isolation sheet shows a curve with a peak value. The peak value appears at 905MHz. For example, when the distance between the UHF RFID tag reader and the UHF RFID tag antenna is 2 meters, the antenna data may only be read at the working frequency near the peak value of 905MHz, and at frequencies far from the peak value, such as 890MHz and 930MHz, the antenna data cannot be read. This results in limiting the ability to read antenna data and a narrower actual operating bandwidth. If reading the antenna data with 890MHz or 930MHz at a maximum distance of about 1.5 meters is desired, the UHF RFID tag reader must move closer than 1.5 meters or the RFID tag reader is restricted to be in front of the antenna without any angle deviation that the straight line distance is less than 1.5 meters. This brings inconveniences in reading the data and makes the stability worse. However, in contrast, the "maximum read distance/frequency" plot of the isolation sheet of embodiment 1 shows a "flat zone" in the range of 890MHz to 950MHz. This makes the actual operating bandwidth far span the range of 890MHz to 950MHz, wider than the actual operating bandwidth of the UHF RFID tag with the commercially available isolation sheet. Furthermore, there is no need to limit the UHF RFID tag reader to be in front of the antenna and in straight line, and even if there is an angle deviation, the antenna data can still be read, resulting in higher stability.

### <Proportion of resin material and insulated soft magnetic particles in the isolation sheet>

The present disclosure further produces isolation sheets of different proportions of resin material and insulated soft magnetic particles and different thicknesses according to Table 3 below and measures the maximum reading distance and recovery percentage using the aforementioned method and equipment.

**Table 3**

| Item | Proportion for the insulated soft magnetic particles in the isolation sheet (wt%) | Proportion for the resin material in the isolation sheet (wt%) | Thickness of the isolation sheet (mm) | Maximum reading distance (m) | Recovery percentage (%) |
|---|---|---|---|---|---|
| Embodiment 1-1 | 70 | 30 | 0.5 | 0.580 | 15.41 |
| | | | 1.0 | 1.050 | 27.90 |
| Embodiment 1 | 77.5 | 22.5 | 0.5 | 1.998 | 53.08 |
| | | | 1.0 | 3.764 | 100.00 |
| Embodiment 1-2 | 80 | 20 | 0.5 | 1.862 | 49.47 |
| | | | 1.0 | 2.344 | 62.27 |
| Embodiment 1-3 | 87 | 13 | 0.5 | 0.653 | 17.35 |
| | | | 1.0 | 0.814 | 21.63 |
| Comparative example 3 | 90 | 10 | 0.5 | 0.471 | 12.51 |
| | | | 1.0 | 0.673 | 17.88 |

As previously described, when the thickness of the isolation sheet is 0.5mm, a recovery percentage greater than 15% or a maximum reading distance greater than 0.5m is acceptable. Therefore, in Embodiments 1-1, 1, 1-2 and 1-3, the recovery percentages measured with a thickness of 0.5mm are all greater than 15% and the maximum reading distances are all greater than 0.5m. Thus, the resin material accounts for 13wt% to 30wt% of the isolation sheet and the plurality of insulated soft magnetic particles 322 account for 70wt% to 87wt% of the isolation sheet. The resin material and the plurality of insulated soft magnetic particles account for 100wt% of the isolation sheet in total.

In summary, the present disclosure has the following advantages: (1) The electromagnetic factors of the isolation sheet in the present disclosure are limited to the product of the real part of the dielectric constant (ε'), the dielectric quality factor (Qε), the real part of the permeability (µ') and the magnetic quality factor (Qµ) between 3000 and 4500, preferably between 3522.40 and 4460.50 and more preferably between 3550 and 4000, to achieve the effect of simultaneously matching the electrical and magnetic properties in the single-layer structure. (2) Placing the isolation sheet of the present disclosure correspondingly between the antenna of the UHF RFID tag and the metal product, excellent recovery rates may be measured. (3) When the thickness of the isolation sheet of the present disclosure exceeds a specific thickness, a gain effect is generated, which allows the maximum reading distance to exceed or be greater than the original reading distance. The limitations mentioned in prior art or literature is broken through. (4) The isolation sheet of the present disclosure has broken through the limitation that the isolation sheet must be larger than 0.5mm in the prior arts. (5) By using the isolation sheet of the present disclosure for the UHF RFID tags, when the UHF RFID tag reader reads the antenna data, the effect of high stability and the antenna data may be read throughout the full frequency domain is achieved.

3 : UHF RFID tag
31 : antenna
32 : isolation sheet
321 : resin layer
322 : insulated soft magnetic particle
3221 : core part
3222 : shell part
4 : UHF RFID tag reader
M : metal product

## Claims

1. An isolation sheet, comprising:
a resin layer (321), and
a plurality of insulated soft magnetic particles (322), dispersed in the resin layer (321);
the isolation sheet (32) having:
a real part of dielectric constant,
an imaginary part of dielectric constant,
a dielectric quality factor,
a real part of permeability,
an imaginary part of permeability, and
a magnetic quality factor,
the dielectric quality factor being a quotient obtained by dividing the real part of the dielectric constant with the imaginary part of the dielectric constant, and
the magnetic quality factor being a quotient obtained by dividing the real part of the magnetic permeability with the imaginary part of the magnetic permeability;
wherein the isolation sheet (32) is suitable for a working frequency bandwidth of 860MHz to 960MHz; and
wherein a thickness of the isolation sheet (32) is less than 0.5mm;
**characterized in that**
a product of the real part of the dielectric constant, the dielectric quality factor, the real part of the permeability and the magnetic quality factor is between 3522.40 and 4460.50;
wherein the real part of the dielectric constant is between 11.15 and 16.53, the imaginary part of the dielectric constant is between 0.8 and 1.33, the real part of the permeability is between 5.23 and 6.12, the imaginary part of the permeability is between 1.23 and 2.42, the dielectric quality factor is between 12.43 and 19.50 or the magnetic quality factor is between 2.16 and 4.69, a product of the real part of the dielectric constant and the dielectric quality factor is between 155.40 and 311.81 or a product of the real part of the permeability and the magnetic quality factor is between 11.30 and 28.70;
wherein the insulated soft magnetic particles (322) is spherical in shape, the insulated soft magnetic particles (322) have a core part (3221) and a shell part (3222) surrounding the core part (3221); the core part (3221) is a soft magnetic core part made of carbonyl iron powder; and the shell part (3222) is made of an insulating material and sequentially coated with a phosphate film and a silicate film by overlay coating on the core part from inside out;
wherein the plurality of insulated soft magnetic particles (322) account for 70wt% to 77.5wt% of the isolation sheet (32), the resin layer (321) is composed of a resin material, the resin material accounts for 22.5wt% to 30wt% of the isolation sheet (32), the resin material and the plurality of insulated soft magnetic particles (322) account for 100wt% of the isolation sheet (32) in total, and particle size of the insulated soft magnetic particles (322) is between 1µm and 5µm;
wherein the isolation sheet (32) has an integrated molding single-layer structure;
wherein the resin material is a thermoplastic polyurethane elastomer; and
wherein the isolation sheet (32) is manufactured by mixing the thermoplastic polyurethane elastomer with the plurality of insulated soft magnetic particles (322) after weighing, then milling into a flexible rolled body, and subsequently cutting the flexible rolled body into the isolation sheet (32).

2. An ultra high frequency radio frequency identification (UHF RFID) tag, comprising:
an antenna (31), and
an isolation sheet (32) according to claim 1 disposed below the antenna (31).

## Patentansprüche

1. Eine Isolierfolie, umfassend:
eine Harzschicht (321 ) und
mehrere isolierte weichmagnetische Partikel (322), die in der Harzschicht (321) verteilt sind;
die Isolierfolie (32) mit:
einem Realteil der Dielektrizitätskonstante,
einem Imaginärteil der Dielektrizitätskonstante,
einem dielektrischen Qualitätsfaktor,
einem Realteil der Permeabilität,
einem Imaginärteil der Permeabilität und
einem magnetischen Qualitätsfaktor,
der dielektrische Qualitätsfaktor ein Quotient ist, der durch Division des Realteils der Dielektrizitätskonstante durch den Imaginärteil der Dielektrizitätskonstante erhalten wird,
wobei der magnetische Qualitätsfaktor ein Quotient ist, der durch Division des Realteils der magnetischen Permeabilität durch den Imaginärteil der magnetischen Permeabilität erhalten wird,
wobei die Isolierfolie (32) für eine Arbeitsfrequenzbandbreite von 860 MHz bis 960 MHz geeignet ist;
wobei eine Dicke der Isolierfolie (32) weniger als 0,5 mm beträgt;
**dadurch gekennzeichnet, dass**
ein Produkt aus dem Realteil der Dielektrizitätskonstante, dem dielektrischen Qualitätsfaktor, dem Realteil der Permeabilität und dem magnetischen Qualitätsfaktor zwischen 3522,40 und 4460,50 liegt;
der Realteil der Dielektrizitätskonstante dabei zwischen 11,15 und 16,53, der Imaginärteil der Dielektrizitätskonstante zwischen 0,8 und 1,33, der Realteil der Permeabilität zwischen 5,23 und 6,12, der Imaginärteil der Permeabilität zwischen 1,23 und 2,42, der dielektrische Qualitätsfaktor zwischen 12,43 und 19,50 oder der magnetische Qualitätsfaktor zwischen 2,16 und 4,69, ein Produkt aus dem Realteil der Dielektrizitätskonstante und dem dielektrischen Qualitätsfaktor zwischen 155,40 und 311,81 oder ein Produkt aus dem Realteil der Permeabilität und dem magnetischen Qualitätsfaktor zwischen 11,30 und 28,70 liegt;
wobei die isolierten weichmagnetischen Partikel (322) kugelförmig sind und die isolierten weichmagnetischen Partikel (322) einen Kernteil (3221) und einen Schalenteil (3222) aufweisen, der den Kernteil (3221) umgibt; der Kernteil (3221) ein weichmagnetischer Kernteil aus Carbonyleisenpulver ist; und der Schalenteil (3222) aus einem isolierenden Material besteht und nacheinander mit einem Phosphatfilm und einem Silikatfilm durch Overlay-Beschichtung des Kernteils von innen nach außen beschichtet wird;
die mehreren isolierten weichmagnetischen Partikel (322) dabei 70 Gew.-% bis 77,5 Gew.-% der Isolierfolie (32) ausmachen, die Harzschicht (321) aus einem Harzmaterial besteht, das Harzmaterial 22,5 Gew.-% bis 30 Gew.-% der Isolierfolie (32) ausmacht, das Harzmaterial und die mehreren isolierten weichmagnetischen Partikel (322) 100 Gew.-% der Isolierfolie (32) ausmachen; wobei die Gesamt- und Partikelgröße der isolierten weichmagnetischen Partikel (322) zwischen 1 µm und 5 µm liegt;
wobei die Isolierfolie (32) eine einschichtige integrierte Formstruktur aufweist;
wobei das Harzmaterial ein thermoplastisches Polyurethan-Elastomer ist; und
wobei die Isolierfolie (32) durch Mischen des thermoplastischen Polyurethan-Elastomers mit den mehreren isolierten weichmagnetischen Partikeln (322) nach dem Wiegen, anschließendem Mahlen zu einem flexiblen gerollten Körper und nach anschließendem Schneiden des flexiblen gerollten Körpers in die Isolierfolie (32) hergestellt wird;

2. Ein Ultrahochfrequenz-(UHF)-RFID-Tag (Radiofrequenzidentifikation), umfassend:
eine Antenne (31 ), und
eine Isolierfolie (32) nach Anspruch 1, die unter der Antenne (31) angeordnet ist.

## Revendications

1. Une feuille d'isolation, comprenant:
une couche de résine (321), et
une pluralité de particules magnétiques douces isolées (322),
dispersées dans la couche de résine (321) ;
la feuille d'isolation (32) présentant:
une partie réelle de constante diélectrique,
une partie imaginaire de constante diélectrique,
un facteur de qualité diélectrique,
une partie réelle de perméabilité,
une partie imaginaire de perméabilité, et
un facteur de qualité magnétique,
le facteur de qualité diélectrique étant un quotient obtenu en divisant la partie réelle de la constante diélectrique par la partie imaginaire de la constante diélectrique, et
le facteur de qualité magnétique étant un quotient obtenu en divisant la partie réelle de la perméabilité magnétique par la partie imaginaire de la perméabilité magnétique;
dans laquelle la feuille d'isolation (32) est adaptée à une bande de fréquence de fonctionnement comprise entre 860 MHz et 960 MHz ; et
dans laquelle une épaisseur de la feuille d'isolation (32) est inférieure à 0,5 mm;
**caractérisée en ce qu'**un produit de la partie réelle de la constante diélectrique, du facteur de qualité diélectrique, de la partie réelle de la perméabilité et du facteur de qualité magnétique est compris entre 3522,40 et 4460,50;
dans laquelle la partie réelle de la constante diélectrique est comprise entre 11,15 et 16,53, la partie imaginaire de la constante diélectrique est comprise entre 0,8 et 1,33, la partie réelle de la perméabilité est comprise entre 5,23 et 6,12, la partie imaginaire de la perméabilité est comprise entre 1,23 et 2,42, le facteur de qualité diélectrique est compris entre 12,43 et 19,50 ou le facteur de qualité magnétique est compris entre 2,16 et 4,69, un produit de la partie réelle de la constante diélectrique et du facteur de qualité diélectrique est compris entre 155,40 et 311,81 ou un produit de la partie réelle de la perméabilité et du facteur de qualité magnétique est compris entre 11,30 et 28,70;
dans laquelle les particules magnétiques douces isolées (322) sont de forme sphérique, les particules magnétiques douces isolées (322) comportent une partie cœur (3221) et une partie coquille (3222) entourant la partie cœur (3221) ; la partie cœur (3221) est un cœur magnétique doux constitué de poudre de fer carbonyle ; et la partie coquille (3222) est constituée d'un matériau isolant et est séquentiellement revêtue d'un film de phosphate et d'un film de silicate par revêtement par superposition sur la partie cœur (3221) de l'intérieur vers l'extérieur;
dans laquelle la pluralité de particules magnétiques douces isolées (322) représente de 70% à 77,5% du poids de la feuille d'isolation (32), la couche de résine (321) est constituée d'un matériau de résine, le matériau de résine représente de 22,5 % en poids à 30 % en poids de la feuille d'isolation (32), le matériau de résine et la pluralité de particules magnétiques douces isolées (322) représentent au total 100 % du poids de la feuille d'isolation (32), et la taille des particules des particules magnétiques douces isolées (322) est comprise entre 1 µm et 5 µm;
dans laquelle la feuille d'isolation (32) présente une structure monocouche moulée intégrée;
dans laquelle le matériau de résine est un élastomère de polyuréthane thermoplastique; et
dans laquelle la feuille d'isolation (32) est fabriquée en mélangeant l'élastomère de polyuréthane thermoplastique avec la pluralité de particules magnétiques douces isolées (322) après pesée, puis en broyant pour former un corps roulé flexible, et en découpant ensuite le corps roulé flexible pour former la feuille d'isolation (32).

2. Une étiquette d'identification par radiofréquence à ultra-haute fréquence (UHF RFID), comprenant :
une antenne (31) , et
une feuille d'isolation (32) selon la revendication 1 disposée sous l'antenne (31).
